# EUROPÄISCHE PATENTANMELDUNG

(11) **EP 1 868 313 A2**
(43) Veröffentlichungstag der Anmeldung: **19.12.2007**
(21) Anmeldenummer: 07109229.0
(22) Anmeldetag: 30.05.2007
(51) Int. Cl.: H04L 5/00, H04L 7/00

(54) **Verfahren zur Datenübertragung zwischen einer Bestückkopf-Steuereinrichtung und einer zentralen Steuereinrichtung in einem Bestückautomat, Bestückautomat, Bestückkopf, senderseitige Übertragungseinrichtung und System aus senderseitiger und empfängerseitiger Übertragungseinrichtung**

(30) Priorität: 14.06.2006 DE 102006027662
(71) Anmelder: SIEMENS AKTIENGESELLSCHAFT, 80333 München (DE)
(72) Erfinder: Burger, Stefan, 81379, München (DE)
(74) Vertreter: Berg, Peter

(57) **Zusammenfassung**

Bei einer Datenübertragung mit 300 Mbps der Daten einer Digitalkamera (7,8) eines Bestückkopfs (2) müsste ein geschirmtes Kabel verwendet werden, welches teuer ist und Probleme beim konstruktiven Aufbau der Kabelhalterungen macht. Daher wird erfindungsgemäß vorgeschlagen, die Daten mit sich periodisch verändernder Taktfrequenz vom Bestückkopf (2) an die zentrale Steuereinrichtung (10) des Bestückautomaten (1) zu übertragen. Anschließend wird der Datenstrom mit der ursprünglichen Taktrate wiederhergestellt. Damit lassen sich die Peakwerte im Spektrum um bis zu 20 dB reduzieren.

## Beschreibung

Verfahren zur Datenübertragung zwischen einer Bestückkopf-Steuereinrichtung und einer zentralen Steuereinrichtung in einem Bestückautomat, Bestückautomat, Bestückkopf, senderseitige Übertragungseinrichtung und System aus senderseitiger und empfängerseitiger Übertragungseinrichtung

Die Erfindung bezieht sich auf ein Verfahren zur Datenübertragung zwischen einer Bestückkopf-Steuereinrichtung und einer zentralen Steuereinrichtung in einem Bestückautomat, einem Verfahren zur Datenübertragung zwischen einer zentralen Steuereinrichtung in einem Bestückautomat und einer Bestückkopf-Steuereinrichtung, einen Bestückautomat mit einer zentralen Steuereinrichtung gemäß dem Oberbegriff des Patentanspruchs 11, einen Bestückkopf für einen Bestückautomaten, eine senderseitige Übertragungseinrichtung für eine Digitalkamera und ein System aus senderseitiger Übertragungseinrichtung und empfängerseitiger Übertragungseinrichtung.

In Bestückautomaten werden zu bestückende Bauelemente aus einer Zuführeinrichtung mittels eines Bestückkopfs entnommen, über einem zu bestückenden Substrat positioniert und auf dem Substrat abgesetzt. Damit die Bauelemente an der richtigen Position auf dem Substrat abgesetzt werden können, ist am Bestückkopf eine so genannte Leiterplattenkamera angeordnet, die ein Abbild von Positioniermarkierungen auf der Leiterplatte aufnimmt, dieses Abbild in Form von Bilddaten an eine zentrale Steuereinrichtung des Bestückautomaten überträgt und mit Hilfe dieser Daten die Position der Leiterplatte im Bestückautomaten bestimmt wird. Darüber hinaus ist am Bestückkopf eine so genannte Bauelementekamera angeordnet, die ein Abbild vom Bestückkopf aufgenommener Bauelemente aufnimmt, die dazugehörigen Bilddaten an die zentrale Steuereinrichtung des Bestückautomaten übermittelt und anhand dieser Daten die Position des Bauelements am Bestückkopf bestimmt wird. Mit Hilfe dieser Daten kann vor dem Aufsetzen des Bauelements auf das Substrat die Lage des Bauelements korrigiert werden, damit dieses in der richtigen Position und der richtigen Winkellage auf das Substrat aufgesetzt werden kann.

Als Kameras werden dabei Digitalkameras eingesetzt, die ihre Bilder über eine serielle Hochgeschwindigkeits-Datenverbindung vom Bestückkopf über einen so genannten Kabelschlepp zur zentralen Steuereinrichtung übertragen. Die Datenübertragung läuft dabei mit beispielsweise 300 Mbps (Megabit pro Sekunde) - das entspricht einer Taktfrequenz von 150 MHz. Aus Gründen der elektromagnetischen Verträglichkeit (EMV, elektromagnetische Störabstrahlung gemäß IEC-Norm) muss dafür ein geschirmtes Kabel verwendet werden, welches teuer ist und Probleme beim konstruktiven Aufbau der Kabelhalterungen macht. Vermutlich besitzt ein solches geschirmtes Kabel auch eine geringere Lebensdauer als bisher verwendete ungeschirmte Flachwandleitungen.

Als Alternative kommt eine Datenübertragung mit Lichtleitern in Frage. In diesem Fall sind minimale EMV-Probleme zu erwarten, allerdings ist nachteilig, dass zusätzlich zur bekannten Verbindungstechnologie mit Kupferleitern eine neue Technologie eingeführt werden muss - in Bezug auf Steckverbinder, Leitungstyp und Leitungsführung im Kabelschlepp.

Es ist daher die Aufgabe der Erfindung, ein Verfahren zur Datenübertragung, einen Bestückautomat und einen Bestückkopf sowie eine senderseitige Übertragungseinrichtung und ein System aus einer senderseitigen und einer empfängerseitigen Übertragungseinrichtung anzugeben, mit deren Hilfe serielle Daten mit hoher Bitrate in einfacher Weise an die zentrale Steuereinrichtung des Bestückautomaten übertragen werden können.

Die Aufgabe wird erfindungsgemäß gelöst durch ein Verfahren zur Datenübertragung mit den Merkmalen des Patentanspruchs 1, durch einen Bestückautomaten mit den Merkmalen des Patentanspruchs 14, durch einen Bestückkopf mit den Merkmalen des Patentanspruchs 20, durch eine senderseitige Übertragungseinrichtung mit den Merkmalen des Patentanspruchs 24 und durch ein System aus einer senderseitigen und einer empfängerseitigen Übertragungseinrichtung mit den Merkmalen des Patentanspruchs 27.

Dabei werden die Daten mittels sich verändernder Taktrate vom Bestückkopf an die zentrale Steuereinrichtung übertragen. Dadurch entsteht ein Frequenzspektrum ohne ausgeprägte Spektrum-Linien. Die Linien werden sozusagen verschliffen, das heißt auf einen größeren Frequenzbereich verteilt. Dadurch werden die Spitzenwerte im Spektrum um bis zu 20 dB reduziert. In Kombination mit schaltungstechnischen Maßnahmen werden die für die EMV-Abstrahlung relevanten Amplituden so weit reduziert, dass auf die Schirmung des Kabels verzichtet werden kann. In der vorteilhaften Ausgestaltung des Verfahrens nach Anspruch 2 ist sichergestellt, dass eine vollständige Kompatibilität der durch das Verfahren aufgebauten Schnittstelle zwischen dem Bestückkopf und der zentralen Steuereinrichtung sichergestellt ist.

Eine größere Flexibilität lässt sich gemäß der vorteilhaften Ausgestaltung des Verfahrens nach Anspruch 3, des Bestückautomaten nach Anspruch 16, des Bestückkopfs nach Anspruch 22 und der senderseitigen Übertragungseinrichtung nach Anspruch 26 dadurch erreichen, dass die abgespeicherten Daten auf mehrere Kanäle aufgeteilt werden, auf denen die Daten dann seriell mit jeweils sich verändernder Taktrate übertragen werden.

Durch die sich periodisch verändernde Taktrate gemäß Anspruch 4 lässt sich das Verfahren in einfacher Weise realisieren.

In der bevorzugten Ausgestaltung des Verfahrens wird die Taktperiode gleich 8 µs gewählt, damit innerhalb einer normalen Bandbreite eines Messempfängers von 120 kHz maximal eine Spektral-Linie enthalten ist.

In vorteilhafter Weise lassen sich gemäß eines Verfahrens nach Anspruch 9 zusätzlich weitere Steuer- und/oder Messsignale durch das Verfahren übertragen.

In der bevorzugten Ausgestaltung des Verfahrens nach Patentanspruch 10 ist vorgesehen, dass eine mittelwertfreie Datenübertragung dadurch sichergestellt wird, dass - nachdem der erste Datenstrom aus mittelwertfreien Datenwörtern erzeugt wird - Blöcke von mehreren vollständigen Datenwörtern erzeugt werden, die über einen der Kanäle übertragen werden. Dadurch ist sichergestellt, dass beim Benutzen von Transformatoren in der Schaltungstechnik und beim Übertragen über den Kabelschlepp keine Störungen auftreten.

Durch die Erfindung lässt sich in bevorzugter Weise beim Bestückautomaten gemäß Anspruch 19 und des Systems nach Anspruch 26 ein preiswertes nicht geschirmtes Kabel für die Übertragung der Daten verwenden.

Anhand eines Ausführungsbeispiels in den Figuren der Zeichnungen wird die Erfindung näher erläutert.

### Dabei zeigen

- Fig. 1: schematisch einen Bestückautomaten und
- Fig. 2: ein schematisches Blockschaltbild der erfindungsgemäßen Realisierung.

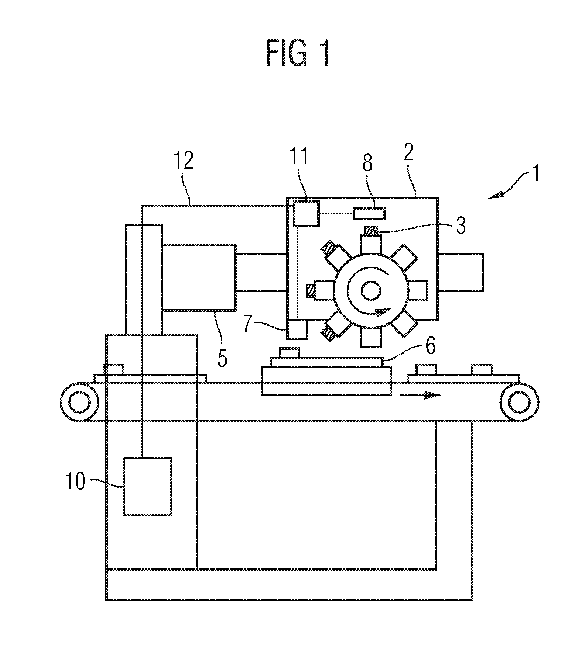

In Fig. 1 ist schematisch ein Bestückautomat 1 dargestellt, der mit Hilfe eines Bestückkopfs 2 Bauelemente 3 aus nicht dargestellten Zuführeinheiten entnimmt, anschließend mit Hilfe eines Positioniersystems 5 in xy-Richtung parallel zu einem zu bestückenden Substrat 6, beispielsweise einer Leiterplatte, verfahren wird und die Bauelemente 3 auf das Substrat 6 absetzt. Der Bestückkopf 2 ist dabei mit einer so genannten Leiterplattenkamera 7 und einer Bauelementekamera 8 ausgestattet. Die Leiterplattenkamera 7 dient der Erkennung von Positioniermarken (nicht dargestellt) auf dem Substrat 6, mit deren Hilfe die Position des Substrats 6 im Bestückautomat 1 ermittelt wird. Die Bauelementekamera 8 nimmt Bilder der am Bestückkopf 2 befindlichen Bauelemente 3 auf, damit anschließend die Position der Bauelemente 3 am Bestückkopf 2 ermittelt werden kann, um anschließend den Bestückkopf 2 mit Hilfe des Positioniersystems 5 an die richtige Stelle über das Substrat 6 zu positionieren. Darüber hinaus kann der Bestückkopf 2 Rotationsfehler der Bauelemente 3 korrigieren. Die von der Leiterplattenkamera 7, bzw. der Bauelementekamera 8, die in der Regel als Digital-Kameras ausgebildet sind, aufgenommenen Bilder werden in Daten umgesetzt und an eine Bestückkopf-Steuereinrichtung 11 übertragen. Die Bestückkopf-Steuereinrichtung 11 überträgt diese Daten über ein Kabel 12 an eine zentrale Steuereinrichtung 10 des Bestückautomaten, in der die Auswertungen durchgeführt und das Positioniersystem 5 und der Bestückkopf 2 dementsprechend angesteuert werden.

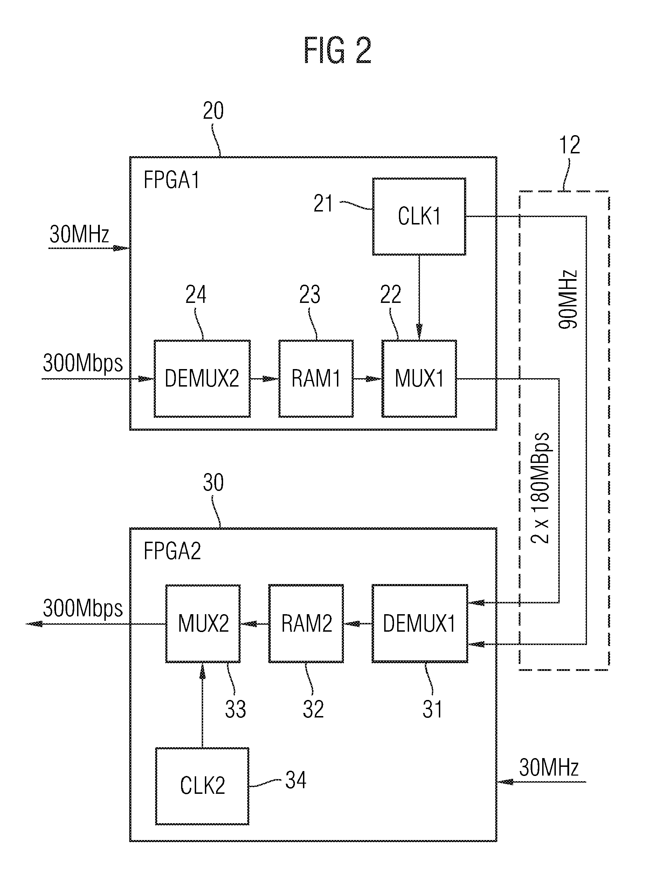

In Fig. 2 ist detaillierter dargestellt wie die Übertragung zwischen der Bestückkopf-Steuereinrichtung 11 und der zentralen Steuereinrichtung 10 abläuft. Dazu ist in der Bestückkopf-Steuereinrichtung 11 eine senderseitige Übertragungseinrichtung 20 (hier ein senderseitiges Field Programmable Gate Array (FPGA1)) vorgesehen, welche einen senderseitigen Taktgenerator 21, einen senderseitigen Parallel-Seriell Wandler 22, eine senderseitige Speichereinheit 23 und einen senderseitigen Seriell-Parallel-Wandler 24 umfasst. Die Daten der Leiterplattenkamera 7 bzw. der Bauelementekamera 8 werden in der Bestückkopf-Steuereinrichtung 11 durch einen seriellen Datenstrom mit einer Datenrate von 300 Mbps an den Seriell-Parallel-Wandler 24 als Demultiplexer übermittelt. Der Demultiplexer 24 teilt den seriellen Datenstrom in mehrere serielle Datenströme auf und speichert die dazugehörigen Datensignale in der senderseitigen Speichereinheit 23 zur Zwischenpufferung und Anpassung der Datenrate.

Ein senderseitiger Parallel-Seriell-Wandler 22 (Multiplexer MUX) überträgt die in der senderseitigen Speichereinrichtung 23 gespeicherten Daten über zwei Kanäle mit jeweils 180 Mbps über den Kabelschlepp 12. Die vom senderseitigen Parallel-Seriell-Wandler 22 benutzte Taktrate wird dabei periodisch verändert mit Hilfe des senderseitigen Taktgenerators 21. Dieser erzeugt mit einer Periode von 8 µs jeweils eine sich verändernde Taktfrequenz im Intervall von 160 bis 200 MHz in einem so genannten "Dreieck-Sweep". Die Periode kann auch anders gewählt werden, beispielsweise zwischen 5µs und 10µs, eine Periode von 8µs ist bevorzugt, da damit innerhalb einer normalen Bandbreite eines Messempfängers von 120 kHz maximal eine Spektral-Linie enthalten ist.

Die Intervallgrenzen sind dabei so zu wählen, dass in Abhängigkeit von einer gewünschten mittleren Datenübertragungsrate der Anfangswert des Intervalls größer oder gleich 50% der mittleren Datenübertragungsrate beträgt und der Endwert des Intervalls kleiner oder gleich 200% der mittleren Datenübertragungsrate beträgt. Dadurch wird die EMV-Abstrahlung minimiert und es können ungeschirmte Übertragungsleitungen 12 trotz hoher Datenrate verwendet werden.

Auf der Empfängerseite wird in einer empfängerseitigen Übertragungseinrichtung 30 (einem zweiten Field Programmable Gate Array (FPGA2)) mit Hilfe eines empfängerseitigen Seriell-Parallel-Wandler 31 (DEMUX1), einer empfängerseitigen Speichereinheit 32 und einem empfängerseitigen Parallel-Seriell-Wandler 33 (MUX2) das Signal mit der ursprünglichen Taktrate (im Beispiel 300 Mbps) wiederhergestellt.

Ist die mittlere Bitrate bzw. mittlere Datenübertragungsrate des Signals auf dem Kabelschlepp 12 gleich der Eingangsbitrate, bleiben die Eigenschaften des Ursprungssignals, beispielsweise Mittelwertfreiheit, erhalten, allerdings können keine zusätzlichen Digitalsignale übertragen werden.

Ist die mittlere Bitrate des Signals auf dem Kabelschlepp 12 größer als die Eingangsbitrate, z.B. wie in Fig. 2 2 x 180 Mbps = 360 Mbps, können zusätzliche Digitalsignale über den Kabelschlepp 12 übertragen werden, die vorher in der senderseitigen Speichereinrichtung 23 abgespeichert wurden. Solche zusätzlichen Signale können beispielsweise Positionssignale von Inkrementalgebern, statische Signale wie z.B. für Endschalter, weitere Kommunikationskanäle, z.B. Statusrückmeldungen von den Kameras oder auch Checksummen zur Absicherung der gesamten Datenübertragung sein.

In Fig. 2 ist dargestellt, dass über den Kabelschlepp 12 auch ein Takt mit der halben Bitrate (= 90 MHz) übertragen wird. Dabei werden zur Wiederherstellung des Taktes zur Auswertung beide Taktflanken genutzt. Natürlich ist es auch möglich, statt dessen einen Takt mit der ursprünglichen Taktrate zu übertragen, bzw. Verfahren zu verwenden, die ohne Taktübertragung auskommen, bei denen der Takt aus dem Signal wiederhergestellt werden kann.

Wird ein Takt zusätzlich mit übertragen, dann ist die Auswertung der Signale einfach durch Schieberegister möglich. Eine Zeitmarkierung als Synchronsignal kann im Signal oder im Takt übertragen werden. Beispielsweise kann im Taktsignal alle 8 µs eine Pause eingelegt werden.

Mit Hilfe eines 30 MHz, quarzstabilisierten Signals werden in den FPGA durch Übertastung beispielsweise ein Signal mit 1,5 GHz erzeugt bzw. Referenzfrequenzen für die Taktgeneratoren 21 und 34 erzeugt.

Wird der Datenstrom aus mittelwertfreien Datenwörtern (beispielsweise bei einer 8bit/10bit-Codierung, die aus 8bit Wörtern mittelwertfreie 10bit Wörter realisiert) erzeugt, dann können in der senderseitigen Übertragungseinrichtung 20 Blöcke von mehreren vollständigen Datenwörtern (also beispielsweise Vielfachen von 10bit) erzeugt werden, die über einen der Kanäle übertragen werden. Dadurch ist sichergestellt, dass beim Benutzen von Transformatoren in der Schaltungstechnik und beim Übertragen über den Kabelschlepp 12 keine Störungen auftreten.

Durch das erfindungsgemäße Verfahren ist es möglich, die seriellen Daten der Kamera 7,8 über eine ungeschirmte Flachbandleitung zu übertragen, ggf. zusammen mit Stromversorgungsadern, CAN-Bus und anderen Steuersignalen. Dadurch ergeben sich geringere Systemkosten als bei geschirmten Kabeln oder Lichtleiterlösungen, höhere mechanische Zuverlässigkeit als bei geschirmten Kabeln, eine einfachere Integration der Flachbandleitung in dem Kabelschlepp und einfachere und preiswertere Anschlusstechniken der Leitungen.

Auch wenn im Ausführungsbeispiel in erster Linie auf die Übertragung vom Bestückkopf zur zentralen Steuereinrichtung eingegangen wurde, ist das geschilderte Verfahren natürlich auch für die Übertragung von der zentralen Steuereinrichtung zur Bestückkopf-Steuereinrichtung einsetzbar.

## Patentansprüche

1. Verfahren zur Datenübertragung zwischen einer Bestückkopf-Steuereinrichtung (11) und einer zentralen Steuereinrichtung (10) in einem Bestückautomaten (1) mit folgenden Schritten:
- Erzeugen eines ersten seriellen Datenstroms mit einer ersten Taktrate in der Bestückkopf-Steuereinrichtung (11),
- Abspeichern der Daten in einer ersten Speichereinrichtung (23),
- Übertragung der abgespeicherten Daten mittels sich verändernder Taktrate,
- Abspeichern der übertragenen Daten in einer zweiten Speichereinrichtung (32),
- Regenerieren des ersten seriellen Datenstroms mit einer zweiten Taktrate,
- Übertragen des regenerierten seriellen Datenstroms an die zentrale Steuereinrichtung (10).

2. Verfahren zur Datenübertragung nach Anspruch 1, **dadurch gekennzeichnet, dass** dass die erste Taktrate gleich der zweiten Taktrate gewählt wird.

3. Verfahren zur Datenübertragung nach Anspruch 1 oder 2, **dadurch gekennzeichnet, dass** die in der ersten Speichereinrichtung (23) abgespeicherten Daten auf mehrere Kanäle aufgeteilt werden, auf denen die Daten seriell jeweils mit sich verändernder Taktrate übertragen werden.

4. Verfahren zur Datenübertragung nach einem der Ansprüche 1, 2 oder 3, **dadurch gekennzeichnet, dass** die sich verändernde Taktrate sich periodisch verändert.

5. Verfahren zur Datenübertragung nach Anspruch 4, **dadurch gekennzeichnet, dass** die Taktperiode zwischen 5µs und 10µs gewählt wird.

6. Verfahren zur Datenübertragung nach Anspruch 5, **dadurch gekennzeichnet, dass** die Taktperiode gleich 8µs gewählt wird.

7. Verfahren zur Datenübertragung nach einem der Ansprüche 4 bis 6, **dadurch gekennzeichnet, dass** die sich verändernde Taktrate eine mittlere Datenübertragungsrate ergibt und ein Anfangswert des Intervalls der Taktraten größer oder gleich 50% der mittleren Datenübertragungsrate und ein Endwert des Intervalls der Taktraten kleiner oder gleich 200% der mittleren Datenübertragungsrate gewählt wird.

8. Verfahren zur Datenübertragung nach einem der Ansprüche 4 bis 7, **dadurch gekennzeichnet, dass** die sich verändernde Taktrate periodisch zwischen 160MHz und 200 MHz verändert wird.

9. Verfahren zur Datenübertragung nach einem der Ansprüche 1 bis 8, **dadurch gekennzeichnet, dass** in der ersten Speichereinrichtung (23) zusätzlich weitere Steuer- und/oder Mess-Signale abgespeichert werden, welche anschließend ebenfalls mit sich verändernder Taktrate übertragen und in der zweiten Speichereinrichtung (32) abgespeichert werden.

10. Verfahren zur Datenübertragung nach einem der Ansprüche 3 bis 9, **dadurch gekennzeichnet, dass**
- der erste Datenstrom aus Datenwörtern erzeugt wird, die mittelwertfrei sind,
- Blöcke von mehreren vollständigen Datenwörtern erzeugt werden,
- die Blöcke zusammen über einen der Kanäle übertragen werden.

11. Verfahren zur Datenübertragung nach einem der Ansprüche 1 bis 10, **dadurch gekennzeichnet, dass** der sich verändernde Takt zusätzlich mit übertragen wird.

12. Verfahren zur Datenübertragung nach einem der Ansprüche 1 bis 11, **dadurch gekennzeichnet, dass** der serielle Datenstrom aus Bilddaten, die von einer am Bestückkopf (2) angeordneten Kamera (7,8) aufgenommen wurden, erzeugt wird.

13. Verfahren zur Datenübertragung zwischen einer zentralen Steuereinrichtung (10) in einem Bestückautomat (1) und einer Bestückkopf-Steuereinrichtung (11) mit folgenden Schritten:
- Erzeugen eines ersten seriellen Datenstroms mit einer ersten Taktrate in der zentralen Steuereinrichtung (10),
- Abspeichern der Daten in einer ersten Speichereinrichtung (23),
- Übertragung der abgespeicherten Daten mittels sich verändernder Taktrate,
- Abspeichern der übertragenen Daten in einer zweiten Speichereinrichtung (32),
- Regenerieren des ersten seriellen Datenstroms mit einer zweiten Taktrate,
- Übertragen des regenerierten seriellen Datenstroms an die Bestückkopf-Steuereinrichtung (11).

14. Bestückautomat (1) mit einer zentralen Steuereinrichtung (10), mit einem Bestückkopf (2), der eine Bestückkopf-Steuereinrichtung (11) umfasst, **gekennzeichnet durch** eine senderseitige Übertragungseinrichtung (20) mit einer senderseitigen Speichereinrichtung (23), die Daten eines seriellen Datenstroms abspeichert und mit Mitteln (21,22) zum Übertragen der abgespeicherten Daten mit sich verändernder Taktrate,
eine empfängerseitige Übertragungseinrichtung (30) mit einer empfängerseitigen Speichereinrichtung (32), in der die übertragenen Daten abgespeichert werden, und mit Mitteln (33,34) zum Regenerieren des seriellen Datenstroms aus den in der empfängerseitigen Speichereinrichtung (32) abgespeicherten Daten und Übertragen des seriellen Datenstroms an die zentrale Steuereinrichtung (10).

15. Bestückautomat (1) nach Anspruch 14, **dadurch gekennzeichnet, dass** die Mittel (21,22) zum Übertragen der abgespeicherten Daten einen senderseitigen Taktgenerator (21) zum Erzeugen einer sich verändernden Taktrate umfassen.

16. Bestückautomat (1) nach Anspruch 15, **dadurch gekennzeichnet, dass** die Mittel (21,22) zum Übertragen der abgespeicherten Daten einen senderseitigen Parallel-Seriell Wandler (22), der die abgespeicherten Daten auf mehrere Kanäle aufteilt umfassen und in der empfängerseitigen Übertragungseinrichtung (30) ein empfängerseitiger Seriell-Parallel Wandler (31) vorgesehen ist, der die mehreren Kanäle zusammenfasst.

17. Bestückautomat (1) nach Anspruch 16, **dadurch gekennzeichnet, dass** der senderseitige Taktgenerator (21) ein Taktsignal erzeugt, welches an den empfängerseitigen Seriell-Parallel Wandler (31) übertragen und von diesem zum Abspeichern der Daten in der zweiten Speichereinrichtung (32) verwendet wird.

18. Bestückautomat (1) nach einem der Ansprüche 14 bis 17, **dadurch gekennzeichnet, dass** am Bestückkopf (2) eine Kamera (7,8) angeordnet ist, deren Bilddaten den seriellen Datenstrom ergeben.

19. Bestückautomat (1) nach einem der Ansprüche 14 bis 18, **gekennzeichnet durch** ein nichtgeschirmtes Kabel (12) zur Übertragung der Daten von der senderseitigen Übertragungseinrichtung (20) and die empfängerseitige Übertragungseinrichtung (30).

20. Bestückkopf (2) für einen Bestückautomaten (1) mit einer Bestückkopf-Steuereinrichtung (11), **gekennzeichnet durch**
eine senderseitige Übertragungseinrichtung (20) mit einer senderseitigen Speichereinrichtung (23), die Daten eines seriellen Datenstroms abspeichert und mit Mitteln (21,22) zum Übertragen der abgespeicherten Daten mit sich verändernder Taktrate.

21. Bestückkopf (2) nach Anspruch 20, **dadurch gekennzeichnet, dass** die Mittel (22,22) zum Übertragen der abgespeicherten Daten einen senderseitigen Taktgenerator (21) zum Erzeugen einer sich verändernden Taktrate umfassen.

22. Bestückkopf (2) nach Anspruch 20, **dadurch gekennzeichnet, dass** die Mittel (21,22) zum Übertragen der abgespeicherten Daten einen senderseitigen Parallel-Seriell Wandler (22) umfassen, der die abgespeicherten Daten auf mehrere Kanäle aufteilt.

23. Bestückkopf (2) nach einem der Ansprüche 20 bis 22, **dadurch gekennzeichnet, dass** am Bestückkopf (2) eine Kamera (7.8) angeordnet ist, deren Bilddaten den seriellen Datenstrom ergeben.

24. Senderseitige Übertragungseinrichtung (20) für eine Digital-Kamera (7,8) mit
einer senderseitige Übertragungseinrichtung (20) mit einer senderseitigen Speichereinrichtung (23), die Daten eines seriellen Datenstroms mit Daten der Kamera (7,8) abspeichert und mit Mitteln (21,22) zum Übertragen der abgespeicherten Daten mit sich verändernder Taktrate.

25. Senderseitige Übertragungseinrichtung (20) nach Anspruch 24, **dadurch gekennzeichnet, dass** die Mittel (21,22) zum Übertragen der abgespeicherten Daten einen Taktgenerator (21) zum Erzeugen einer sich verändernden Taktrate umfassen.

26. Senderseitige Übertragungseinrichtung (20) nach Anspruch 24, **dadurch gekennzeichnet, dass** die Mittel (21,22) zum Übertragen der abgespeicherten Daten einen senderseitigen Parallel-Seriell Wandler (22) umfassen, der die abgespeicherten Daten auf mehrere Kanäle aufteilt.

27. System aus einer senderseitigen Übertragungseinrichtung (20) für eine Digital-Kamera (7,8), einer empfängerseitigen Übertragungseinrichtung (30) **gekennzeichnet durch** eine senderseitige Speichereinrichtung (23), die Daten eines seriellen Datenstroms mit Daten der Kamera (7,8) abspeichert und mit Mitteln (21,22) zum Übertragen der abgespeicherten Daten mit sich verändernder Taktrate, eine empfängerseitige Speichereinrichtung (32), in der die übertragenen Daten abgespeichert werden, und mit Mitteln (33,34) zum Regenerieren des seriellen Datenstroms aus den in der empfängerseitigen Speichereinrichtung (32) abgespeicherten Daten und Übertragen des seriellen Datenstroms an eine zentrale Steuereinrichtung (10).

28. System nach Anspruch 27,
**dadurch gekennzeichnet, dass**
ein nichtgeschirmtes Kabel (12) zur Übertragung der Daten zwischen der senderseitigen Übertragungseinrichtung (20) und der empfängerseitigen Übertragungseinrichtung (30) vorgesehen ist.
